(19) Europäisches Patentamt
European Patent Office
Office européen des brevets

(11) **EP 4 200 190 B1**

(12) **EUROPÄISCHE PATENTSCHRIFT**

(45) Veröffentlichungstag und Bekanntmachung des Hinweises auf die Patenterteilung:
**28.05.2025   Patentblatt 2025/22**

(21) Anmeldenummer: **22744196.1**

(22) Anmeldetag: **14.07.2022**

(51) Internationale Patentklassifikation (IPC):
**B62D 1/04** *(2006.01)*        **B62D 1/06** *(2006.01)*

(52) Gemeinsame Patentklassifikation (CPC):
**B62D 1/065; B62D 1/046**

(86) Internationale Anmeldenummer:
**PCT/EP2022/069760**

(87) Internationale Veröffentlichungsnummer:
**WO 2023/030737 (09.03.2023 Gazette 2023/10)**

(54) **LENKHANDHABE MIT HEIZUNG UND BERÜHRUNGSERKENNUNG**

STEERING HANDLE WITH HEATING FUNCTION AND CONTACT DETECTION

MANETTE DE DIRECTION À FONCTION DE CHAUFFAGE ET DÉTECTION DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **01.09.2021   DE 102021122593**

(43) Veröffentlichungstag der Anmeldung:
**28.06.2023   Patentblatt 2023/26**

(73) Patentinhaber: **Marquardt GmbH**
**78604 Rietheim-Weilheim (DE)**

(72) Erfinder:
• **BUFE, Michael**
**78589 Dürbheim (DE)**
• **MINK, Achim**
**78532 Tuttlingen (DE)**
• **HAGGE, Robert**
**78073 Bad Dürrheim (DE)**

(74) Vertreter: **Staeger & Sperling**
**Partnerschaftsgesellschaft mbB**
**Sonnenstraße 19**
**80331 München (DE)**

(56) Entgegenhaltungen:
**WO-A1-2018/213344     DE-A1- 102019 124 293**

## Beschreibung

Die Erfindung betrifft eine Lenkhandhabe mit darin integrierter Heizung und Berührungserkennung.

Aus dem Stand der Technik ist eine Vielzahl von Lenkhandhaben, wie beispielsweise Lenkräder bekannt, in welche eine Heizung oder eine Berührungserkennung oder sowohl eine Heizung als auch eine Berührungserkennung integriert sind.

Dabei stellt die Heizung bzw. die Beheizung der Lenkhandhabe in erster Linie eine Komfortfunktion dar, welche einem Bediener ein angenehm temperiertes Bedienelement bereitstellen soll.

Davon abweichend dient die Berührungserkennung überwiegend zur Steigerung der Fahrsicherheit, da durch die Berührungserkennung die Hand des Fahrers bzw. der Fahrer selbst erkannt und dadurch beispielsweise sichergestellt werden soll, dass der Fahrer die Handhabe mit zumindest einer Hand greift. Zusätzlich kann die Information über die Berührung bzw. Anwesenheit von Fahrer und/oder Hand auch bei zahlreichen weiteren System des Fahrzeugs verwendet werden.

Eine solche Berührungserkennung ist insbesondere vor dem Hintergrund automatisierten Fahrens bzw. autonom fahrender Fahrzeuge relevant, bei welchem der Fahrer das Steuer bzw. Lenkrad aus Sicherheitsgründen weiterhin greifen soll. Alternativ könnte dem Fahrzeug auch durch eine Berührung gemeldet werden, dass der Fahrer wieder selbst die Kontrolle über das Fahrzeug übernehmen möchte.

Um sowohl ein beheiztes Lenkrad bzw. eine beheizte Lenkhandhabe als auch eine Berührungserkennung bereitstellen zu können, ist im Stand der Technik meist vorgesehen, dass ein Lenkrad sowohl mit einer Heizung als auch mit einem davon getrennten bzw. separaten Sensor zur Berührungserkennung ausgestattet ist. Das führt jedoch zu einem bauraum- und kostenintensiven Aufbau.

Weiter ist sowohl aus der Schrift EP 2 028 078 A1 als auch aus der Schrift DE 11 2018 005 213 T5 eine Kombination von Heizung und Berührungserkennung bekannt. Gemäß beiden Varianten ist jeweils ein Sensor mit mehreren Sensorleitungen vorgesehen, von welchen eine der Sensorleitungen zugleich als Heizdraht genutzt wird, sodass diese integral miteinander ausgebildet sind.

Dabei ist jedoch problematisch, dass die Steuerung bzw. eine Sensor-Steuerschaltung exakt auf die Heizung bzw. auf die Heiz-Steuerschaltung abgestimmt werden muss, da die Steuerung des Sensors nicht die Heizung und die Steuerung der Heizung nicht den Sensor beeinflussen darf.

Entsprechend ist die Auswertung des Sensors oder eine dafür notwendige Schaltung komplex, teuer und anfällig für Fehler.

Weiterer Stand der Technik auf diesem Gebiet ist insbesondere durch die Schriften DE 10 2019 124 293 A1 und WO 2018/213 344 A1 gegeben.

Der Erfindung liegt deshalb die Aufgabe zugrunde, die vorgenannten Nachteile zu überwinden und eine Lenkhandhabe mit integrierter Beheizung und Berührungserkennung bereitzustellen, welche sowohl kostengünstig als auch insbesondere bezüglich der Ansteuerung einfach ausgeführt werden kann. Diese Aufgabe wird durch die Merkmalskombination gemäß Patentanspruch 1 gelöst.

Erfindungsgemäß wird daher eine Lenkhandhabe mit Beheizung und Berührungserkennung für ein Fahrzeug vorgeschlagen. Bei der Lenkhandhabe kann es sich sowohl um ein Lenkrad als auch beispielsweise um eine Lenkstange, einen Steuerknüppel oder ein Steuerhorn handeln. Die Lenkhandhabe weist ein Kernelement auf, bei welchem es sich beispielsweise um den Kern eines eine Lenkachse umlaufenden Lenkkranzes eines Lenkrades handeln kann. Weiter kann es sich bei dem Kernelement insbesondere um einen Kern in einem Bereich der Lenkhandhabe handeln, an welchem die Lenkhandhabe bestimmungsgemäß von einem Bediener gegriffen werden kann. Neben dem Kernelement weist die Lenkhandhabe erfindungsgemäß eine Steuervorrichtung und zumindest eine auf dem Kernelement und insbesondere auf der Oberfläche des Kernelements angeordnete Funktionsschicht auf. Die Funktionsschicht weist zumindest einen in der Funktionsschicht verlaufenden elektrisch leitfähigen Funktionsleiter als Heizdraht zur Beheizung der Lenkhandhabe auf, welcher zugleich ein Sensorelement bzw. eine Sensorleitung oder Sensorelektrode eines Sensors zur Berührungserkennung der Lenkhandhabe ist. Zur Ansteuerung bzw. Bestromung des Funktionsleiters ist die Steuervorrichtung elektrisch mit zumindest einem der Funktionsleiter verbunden und weist eine Heiz-Steuerschaltung zur Beheizung der Lenkhandhabe über den Funktionsleiter sowie eine Sensor-Steuerschaltung zur Berührungserkennung der Lenkhandhabe über den Funktionsleiter auf. Vorzugsweise bilden dabei die Sensor-Steuerschaltung und der Funktionsleiter gemeinsam den Sensor und weiter insbesondere einen kapazitiven Sensor und/oder einen Sensor zur Erfassung einer insbesondere durch Berührung verursachten Änderung einer Impedanz des Funktionsleiters. Zudem ist vorzugsweise keine weitere Sensorleitung vorgesehen, sodass also der Sensor ausgebildet ist, eine Berührung der Lenkhandhabe allein aus einer Annäherung eines Körpers (z.B. Hand oder Knie eines Bedieners bzw. Fahrers) an den als Sensorelektrode wirkenden Funktionsleiter zu erkennen. Besonders vorteilhaft ist gemäß der Erfindung vorgesehen, dass die Steuervorrichtung ausgebildet ist, den Funktionsleiter wechselweise mit der Heiz-Steuerschaltung die Lenkhandhabe beheizend und mit der Sensor-Steuerschaltung eine Berührung der Lenkhandhabe erkennend anzusteuern. Durch die wechselweise Ansteuerung ist es nicht notwendig, die beiden Steuerschaltungen exakt aufeinander abzustimmen, da der Funktionsleiter nicht gleichzeitig, sondern ausschließlich sequentiell, also nacheinander als Heizdraht und als Sensorelement fungiert. Dennoch können die Sensor-Steuerschaltung und die Heiz-Steuerschaltung zur Reduzierung der Signal to noise ratio aufeinander abgestimmt werden. Eine wechselweise Ansteuerung kann zudem auch eine Mittelstellung bzw. einen neutralen Zustand umfassen, in welchem der Funktionsleiter weder mit der Heiz-Steuerschaltung noch mit der Sensor-Steuerschaltung verbunden ist.

Zur Kontaktierung des Funktionsleiters mit der Steuervorrichtung ist vorzugsweise vorgesehen, dass der Funktionsleiter ein erstes Ende und ein entlang der Längsrichtung des Funktionsleiters gegenüberliegendes zweites Ende aufweist, welche jeweils elektrisch mit der Steuervorrichtung kontaktiert sind.

Um sowohl eine möglichst vollständige Beheizung der Lenkhandhabe als auch eine möglichst vollständige Berührungserkennung über den gesamten bestimmungsgemäß greifbaren Bereich der Lenkhandhabe zu ermöglichen, ist vorzugsweise vorgesehen, dass der Funktionsleiter gemäß einem vorbestimmten Muster in der im Wesentliche gesamten Funktionsschicht verläuft.

Sind mehrere Funktionsleiter vorgesehen, kann für jeden Funktionsleiter eine Steuervorrichtung vorgesehen sein. Weiter kann für mehrere Funktionsleiter eine gemeinsame Steuervorrichtung vorgesehen sein, welche für jeden Funktionsleiter jeweils eine Heiz-Steuerschaltung und jeweils eine Sensor-Steuerschaltung aufweist. Darüber hinaus kann für mehrere Funktionsleiter eine gemeinsame Steuervorrichtung vorgesehen sein, welche eine Heiz-Steuerschaltung und eine Sensor-Steuerschaltung für jeweils mehrere Funktionsleiter aufweist.

Weiter ist hierbei eine Weiterbildung vorteilhaft, bei welcher die Funktionsschicht das Kernelement in Umfangsrichtung vollständig umgibt. Dabei ist als Umfangsrichtung die Umfangsrichtung um eine Haupterstreckungsachse bzw. Haupterstreckungskurve der Lenkhandhabe insbesondere in dem bestimmungsgemäß greifbaren Bereich der Lenkhandhabe zu verstehen.

Zudem kann die Funktionsschicht eine Mantelfläche des Kernelements im Wesentlichen vollständig abdeckend auf dem Kernelement angeordnet werden oder allgemein die Mantelfläche des Kernelements im Wesentlichen vollständig abdecken. Bereiche zum Anschluss des Kernelements an weitere Elemente der Lenkhandhabe, wie beispielsweise das Kernelement mit der Lenkachse verbindende Streben, können frei von der Funktionsschicht bleiben. Hierfür kann die Funktionsschicht und insbesondere eine später erläuterte Trägerschicht flexibel und/oder elastisch ausgebildet sein, sodass sich die Form der Funktionsschicht der Form des Kernelements anpassen kann. Weiter kann eine Form der Funktionsschicht vorzugsweise eine Abwicklung der Mantelfläche des Kernelements sein, wobei wiederum Ausnehmungen oder Aussparungen vorgesehen sein können, in welchen Anschlusselemente, wie zu einem Zentralelement führende Streben vorgesehen sein können.

Dabei kann die Funktionsschicht unmittelbar auf dem Kernelement angeordnet sein, wobei zwischen dem Kernelement und der Funktionsschicht auch weitere Schichten, wie beispielsweise eine weiche, die Haptik der Lenkhandhabe verbessernde Schicht angeordnet sein können.

Um eine gleichmäßige Anordnung des Funktionsleiters über die im Wesentliche gesamte Funktionsschicht zu gewährleisten, ist weiter vorzugsweise vorgesehen, dass der zumindest eine Funktionsleiter gleichmäßig in der Funktionsschicht angeordnet ist und insbesondere einem vorbestimmten Verlauf folgend und weiter insbesondere mäanderförmig in bzw. an der Funktionsschicht angeordnet ist. Vorzugsweise ist der Funktionsleiter bzw. sind die Funktionsleiter dabei in eine Vielzahl von Abschnitte unterteilt, zwischen welchen jeweils eine Umlenkung des Funktionsleiters vorliegt, wobei der Abstand unmittelbar zueinander benachbarter Abschnitte des Funktionsleiters gleichbleibend und die Abstände gleich sind.

Ist nicht nur lediglich ein Funktionsleiter sondern eine Vielzahl von Funktionsleitern vorgesehen, sind vorzugsweise auch die Abstände zwischen den Abschnitten verschiedener Funktionsleiter gleichbleibend und gleich.

Um sowohl eine gezielte Beheizung unterschiedlicher Zonen der Lenkhandhabe als auch eine zonenabhängige Berührungserkennung zu ermöglichen, ist gemäß einer weiteren vorteilhaften Variante vorgesehen, dass die Funktionsschicht, insbesondere entsprechend einer Oberfläche des Kernelements und weiter insbesondere die Funktionsschicht in einem bestimmungsgemäß greifbaren Bereich der Lenkhandhabe in zumindest zwei Zonen unterteilt ist und je Zone jeweils ein die jeweilige Zone insbesondere vollständig abdeckender Funktionsleiter vorgesehen ist. Dabei können die Zonen entlang der Haupterstreckung (Haupterstreckungsachse bzw. Haupterstreckungskurve) des Kernelements bzw. des bestimmungsgemäß greifbaren Bereichs der Lenkhandhabe nebeneinander und/oder aufeinanderfolgend angeordnet sein. Sind die Zonen sowohl nebeneinander als auch aufeinanderfolgend angeordnet, ergibt sich daraus eine raster- bzw. matrixartige Anordnung der Zonen.

Die Zonen können quer zu der Haupterstreckungsachse bzw. -kurve der Funktionsschicht, welche der Haupterstreckungsachse bzw. -kurve der Lenkhandhabe entsprechen kann, und/oder entlang dieser benachbart bzw. alternierend angeordnet sein, sodass zwischen Berührungen entlang der Haupterstreckungsachse bzw. -kurve der Lenkhandhabe und/oder Berührungen an einer Vorder- und/oder Rückseite der Lenkhandhabe unterschieden werden kann. Dabei können in einem die Vorderseite der Lenkhandhabe bestimmenden Bereich der Funktionsschicht mehr Zonen vorgesehen sein, als an einem die Rückseite der Lenkhandhabe bestimmenden Bereich der Funktionsschicht.

Weiter können die Zonen auch ineinander verschachtelt bzw. einander umgebend angeordnet sein. Beispielsweise kann eine erste innen liegende Zone von einer zweiten außen liegenden Zone rahmenförmig umgeben sein, wobei sich die beiden Zonen in Quer- und/oder Längsrichtung als Einheit bzw. gemeinsam über die gesamte Ausdehnung der Funktionsschicht erstrecken können.

Weiter ist vorzugsweise vorgesehen, dass die Funktionsschicht eine flexible Trägerschicht aufweist, welche auch als Trägermatte bezeichnet bzw. ausgebildet sein kann. Der zumindest eine Funktionsleiter ist auf der Trägerschicht angeordnet. Alternativ oder zusätzlich ist der zumindest eine Funktionsleiter in die Trägerschicht eingebettet. Weiter kann die Funktionsschicht auch zwei Trägerschichten bzw. Trägermatten aufweisen, zwischen welchen der zumindest eine Funktionsleiter angeordnet bzw. eingebettet ist. Mit der Trägerschicht ist die Funktionsschicht in einfacher Weise auf dem Kernelement oder einem das Kernelement umgebenden Material anordenbar. Entsprechend kann der Funktionsleiter zunächst auf einer eben ausgelegten Trägerschicht angeordnet und fixiert und anschließend mit der Trägerschicht auf dem Kernelement angeordnet werden, wobei hierbei die Trägerschicht meist mit dem darauf angeordneten Funktionsleiter gekrümmt wird bzw. eine zu dem Kernelement korrespondierende gekrümmte Form annimmt.

Vorteilhaft kann zudem vorgesehen sein, dass die Steuervorrichtung ein Schaltelement aufweist, welches ausgebildet ist, den Funktionsleiter wechselweise elektrisch mit der Heiz-Steuerschaltung und der Sensor-Steuerschaltung zu verbinden. Entsprechend ist der Funktionsleiter niemals zugleich elektrisch mit der Heiz-Steuerschaltung und der Sensor-Steuerschaltung verbunden, sodass der Funktionsleiter niemals zeitgleich sowohl von der Heiz-Steuerschaltung und der Sensor-Steuerschaltung bestromt bzw. angesteuert werden kann.

Ferner kann das Schaltelement auch eine Mittelstellung aufweisen, in welcher der zumindest eine Funktionsleiter weder mit der Heiz-Steuerschaltung noch mit der Sensor-Steuerschaltung verbunden ist.

Neben einem physisch vorhandenen Schaltelement in der Steuervorrichtung kann alternativ oder aus Sicherheitsgründen auch zusätzlich vorgesehen sein, dass durch eine Programmierung der Heiz-Steuerschaltung sowie der Sensor-Steuerschaltung und/oder Schaltelemente in der Heiz-Steuerschaltung sowie der Sensor-Steuerschaltung eine gegenseitige Verriegelung erreicht wird, wodurch ein Funktionsleiter nicht gleichzeitig sondern ausschließlich wechselweise die Lenkhandhabe beheizend und eine Berührung der Lenkhandhabe detektierend ansteuerbar ist.

Weiter ist der Funktionsleiter aus einer Vielzahl von Einzeldrähten bzw. Litzen gebildet.

Die Einzeldrähte sind hierbei zumindest abschnittsweise voneinander separiert bzw. beabstandet oder aufgefächert verlaufend angeordnet. Dabei können auch mehrere Abschnitte vorgesehen sein, über welche die Einzeldrähte separiert verlaufen, wobei dazwischen jeweils Abschnitte vorgesehen sind, in welchen die Einzeldrähte als Bündel bzw. gebündelt verlaufen.

Obgleich die Heiz-Steuerschaltung und die Sensor-Steuerschaltung nicht aufeinander abgestimmt sein müssen, ist es vorteilhaft den Funktionsleiter derart auszubilden, dass sowohl eine ausreichend hohe Heizleistung als auch eine ausreichend hohe Sensorleistung bzw. Sensorempfindlichkeit erreicht werden kann. Entsprechend ist vorzugweise vorgesehen, dass ein ohmscher Widerstand des zumindest einen Funktionsleiters und bei mehreren Funktionsleitern jeweils abhängig von einer Länge des Funktionsleiters und/oder einem Verlauf des Funktionsleiters in der Funktionsschicht derart gewählt ist, dass mit dem jeweiligen Funktionsleiter sowohl eine vorbestimmte Heizleistung als auch eine vorbestimmte Sensorempfindlichkeit erreichbar ist.

Anders ausgedrückt, werden insbesondere der vorbestimmte Verlauf des Funktionsleiters als auch die Materialeigenschaften und insbesondere der ohmsche Widerstand des Funktionsleiters so gewählt, dass sowohl eine gewünschte Heizleistung als auch eine gewünschte Sensorleistung bzw. Sensorempfindlichkeit erreicht werden können.

Zum Erreichen einer gewünschten bzw. vorbestimmten Heizleistung beträgt ein Gesamtwiderstand (ohmscher Widerstand) eines Funktionsleiters vorzugsweise zwischen 0,5 und 5 Ohm.

In einem solchen Bereich des Gesamtwiderstands ist weiter vorzugsweise vorgesehen, dass ein Verhältnis einer Gesamtlänge I des Funktionsleiters zu einem Querschnitt des Funktionsleiters im Bereich von 30 bis 300 $m/mm^2$ liegt. Für eine Ausführung des Funktionsleiters als ein Einzeldraht mit einer Querschnittsfläche $A_1$ und eine Ausführung des Funktionsleiters als mehrere Einzeldrähte der Anzahl n und einer jeweiligen Querschnittsfläche $A_2$ gilt entsprechend:

$$\frac{l}{A_1} = \frac{l}{n * A_2} = 30 \dots 300 \frac{m}{mm^2}$$

Wird die Lenkhandhabe als Lenkrad mit einem Lenkraddurchmesser $d_L$ ausgeführt, ist weiter vorzugsweise vorgesehen, dass für eine Gesamtlänge I als Summe aller Längen aller Funktionsleitungen gilt:

$$l \geq 50 * d_L$$

Ausgehend von einem aus einem einzelnen Einzeldraht gebildeten Funktionsleiter mit einer Querschnittsfläche $A_1$ des Einzeldrahtes oder einer aus mehreren Einzeldrähten der Anzahl n gebildeten Funktionsleiter mit einer Querschnittsfläche $A_2$ der Einzeldrähte gilt bezüglich dem Verhältnis zu dem Lenkraddurchmesser $d_L$ vorzugsweise:

$$A_1 = n * A_2 \geq 0{,}66 \ldots 1{,}66 * d_L$$

Wird der Funktionsleiter wie zuvor beschrieben beispielsweise mäanderartig oder aber auch gemäß einem anderen vorbestimmten Muster angeordnet, kann es sich ergeben, dass Abschnitte des Funktionsleiters oder aber auch Abschnitte verschiedener Funktionsleiter benachbart zueinander Verlaufen. Um zu gewährleisten, dass jede bestimmungsgemäße Berührung erfasst wird, ist gemäß einer vorteilhaften Variante vorgesehen, dass ein Abstand zwischen zwei zueinander benachbarten und parallel verlaufenden Abschnitten des zumindest einen Funktionsleiters oder verschiedener Funktionsleiter kleiner oder gleich einem vorbestimmten minimalen Berührabstand ist, welcher insbesondere 10 mm ist. Dabei entspricht der Berührabstand der kleinsten zu detektierenden Berührung, wobei diese entsprechend der ungefähren Breite eines kleinen Fingers 10 mm betragen kann. Dadurch können entsprechend bereits geringfügige Berührungen der Lenkhandhabe, wie beispielsweise durch lediglich einen Finger, erfasst werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    eine Lenkhandhabe;

Fig. 2    eine erste Variante einer Funktionsschicht;

Fig. 3    eine zweite Variante einer Funktionsschicht;

Fig. 4    eine dritte Variante einer Funktionsschicht;

Fig. 5    eine vierte Variante einer Funktionsschicht;

Fig. 6    eine fünfte Variante einer Funktionsschicht;

Fig. 7    einen Abschnitt eines Funktionsleiters.

Die Figuren sind beispielhaft schematisch. Gleiche Bezugszeichen in den Figuren weisen auf gleiche funktionale und/oder strukturelle Merkmale hin.

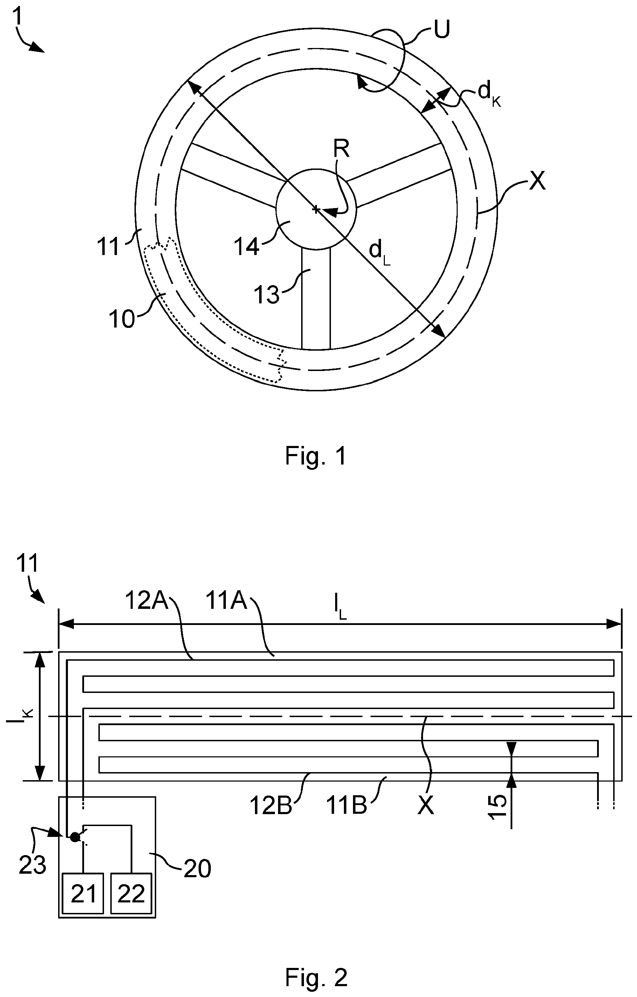

In Figur 1 ist eine schematische Lenkhandhabe 1 und genauer ein Lenkrad als Lenkhandhabe 1 dargestellt, welches im Wesentlichen durch einen Lenkkranz als Kernelement 10, ein Zentralelement 14 und drei das Zentralelement 14 mit dem Kernelement 10 verbindende Streben 13 gebildet ist. Das Kernelement 10 ist zur Lenkung des Fahrzeugs um die Rotationsachse R als Lenkachse drehbar und ist vorliegend rund bzw. als Torus ausgebildet, wobei die Form des Kernelements 10 nicht auf eine torusförmige Ausbildung beschränkt ist. Vielmehr kann die Haupterstreckungsachse X bzw. hier die Haupterstreckungskurve X des Kernelements 10 nahezu jedem vorbestimmten Verlauf folgen, sodass das Kernelement 10 beispielsweise auch oval, zylindrisch oder mehreckig sein kann.

Gemäß der dargestellten Ausführungsform der Lenkhandhabe 1 ist auf dem Kernelement 10 eine die Oberfläche bzw. Mantelfläche des Kernelements, mit Ausnahme der Anschlussstellen für die Streben 13 und optional vorhandenen weiteren Elementen, wie Schaltern, Anzeige- oder Designelementen, vollständig abdeckende Funktionsschicht 11 vorgesehen, welche die Haupterstreckungskurve X, welche selbst die Rotationsachse R umläuft, in Umfangsrichtung U umgibt.

In den Figuren 2 bis 6 sind verschiedene Varianten von Funktionsschichten 11 dargestellt, welche sich im Wesentlichen nur durch die Anzahl ihrer Zonen 11A, 11B, 11C, 11D und entsprechend durch die Anzahl der in den Funktionsschichten 11 angeordneten bzw. vorhandenen Funktionsleiter 12A, 12B, 12C, 12D unterscheiden. Weiter sind die Funktionsschicht 11 jeweils vereinfacht dargestellt, sodass die Abbildung der Funktionsschichten 11 nicht einer Abwicklung einer Mantelfläche eines Torus gemäß dem Kernelement 10 entspricht und die Anschlussbereiche der Streben 13 nicht berücksichtigt.

Aus einem in Figur 1 angetragenen ersten Durchmesser $d_K$ des Torus bzw. des Kernelements 10 sowie einem zweiten Durchmesser $d_L$ des Torus bzw. des Kernelements 10 ergeben sich die Länge $l_K$ in Umfangsrichtung U und die Länge $l_L$ entlang der als Kreislinie ausgebildeten Haupterstreckungskurve X sowie die Fläche A der Mantelfläche des Torus bzw. des Kernelements 10 sowie die Fläche A der Funktionsschicht 11 wie folgt:

$$l_K = \pi d_K$$

$$l_L = \pi d_L$$

$$A = \pi d_K * \pi d_L$$

Wie gemäß der Variante der Funktionsschicht 11 in Figur 2 gezeigt, weist eine mit dieser Funktionsschicht 11 ausgestatte Lenkhandhabe 1 zwei in der Funktionsschicht 11 verlaufende und jeweils mäanderförmig angeordnete elektrisch leitfähige Funktionsleiter 12A, 12B auf. Dabei sind auf der Funktionsschicht zwei Zonen 11A und 11B vorgesehen, welche entlang der Abwicklung der Haupterstreckungsachse X aneinander angrenzen und somit in Umfangsrichtung U zueinander benachbart sind. Je Zone 11A, 11B ist jeweils ein Funktionsleiter 12A, 12B vorgesehen, wobei die Funktionsleiter 12A, 12B auch insbesondere für die Kontaktierung der Funktionsleiter 12A, 12B durch die jeweils andere Zone 11A, 11B verlaufen können, wie es vorliegend für den ersten Funktionsleiter 12A der ersten Zone 11A gezeigt ist.

Die Funktionsleiter 12A, 12B sind jeweils elektrisch mit einer Steuervorrichtung 20 kontaktiert, wobei lediglich die Steuervorrichtung 20 des ersten Funktionsleiters 12A dargestellt ist. Die Steuervorrichtungen 20 weisen jeweils eine Heiz-Steuerschaltung 21 und eine Sensor-Steuerschaltung 22 sowie ein Schaltelement 23 auf, welches ausgebildet ist, den jeweiligen Funktionsleiter 12A, 12B wechselweise mit der Heiz-Steuerschaltung 21 und der Sensor-Steuerschaltung 22 zu verbinden, sodass der jeweilige Funktionsleiter 12A, 12B in einer ersten Schaltstellung des Schaltelements 23 als Heizdraht zur Beheizung der Lenkhandhabe 1 wirkt und ansteuerbar ist und in einer zweiten Schaltstellung des Schaltelements 23 als ein Sensorelement und insbesondere als eine Sensorelektrode eines durch den jeweiligen Funktionsleiter 12A, 12B mit der jeweiligen Sensor-Steuerschaltung gebildeten Sensors zur Berührungserkennung der Lenkhandhabe 1 wirkt und ansteuerbar ist.

Das Schaltelement 23 ist vorliegend mit einem Schaltaktor dargestellt, kann aber auch beispielsweise einen Schaltaktor für jeweils ein Leitungsende des jeweiligen Funktionsleiters 12A, 12B aufweisen.

Um sowohl Berührungen mit einer vorbestimmten bzw. gewünschten Sensorsensitivität detektieren zu können als auch das Lenkrad bzw. die Lenkhandhabe 1 wie vorbestimmt bzw. gewünscht beheizen zu können, werden sowohl die Materialeigenschaften bzw. das für die Funktionsleitung 12A, 12B gewählte Material und der Verlauf der Funktionsleiter 12A, 12B derart gewählt, dass beide Vorgaben erfüllt werden können.

Soll beispielsweise eine Berührung in verschiedenen Bereichen bzw. Zonen der Lenkhandhabe 1 unterscheidbar sein, wird die Funktionsschicht 11 in verschiedene bzw. mehrere und gemäß der Variante in Figur 2 in zwei Zonen 11A, 11B unterteilt, sodass eine Berührung in der ersten Zone 11A von einer Berührung in der zweiten Zone 11B unterscheidbar ist. Beispielhaft kann in Figur 2 die Berührung an einer Vorderseite und an einer Rückseite der Lenkhandhabe 1 unterschieden werden.

Um auch bereits geringfügige Berührungen und insbesondere Berührungen durch einen einzelnen Finger detektieren zu können, ist der Abstand 15 zwischen parallel verlaufenden Abschnitten der Funktionsleiter 12A, 12B bzw. eines Funktionsleiters 12A, 12B kleiner oder gleich einem vorbestimmten Berührabstand, welcher beispielhaft 10 mm ist und der ungefähren Breite eines Fingers entspricht.

Beispielhaft wird von einem Lenkrad mit einem ersten Durchmesser $d_K$ von 35 mm und einem zweiten Durchmesser $d_L$ von 350 mm ausgegangen. Zur Unterscheidung der Berührzonen wir die Funktionsschicht 11 gemäß Figur 2 in zwei Zonen 11A, 11B geteilt und jeweils mit einem Funktionsleiter 12A, 12B versehen. Die zwei Zonen 11A, 11B sind entlang der Umfangsrichtung U bzw. orthogonal zu der Haupterstreckungskurve X nebeneinander angeordnet, sodass zwischen einer Berührung an der vom Fahrer abgewandten Rückseite und einer Berührung an der dem Fahrer zugewandten Vorderseite der Lenkhandhabe 1 unterschieden werden kann. Die Funktionsleiter 12A, 12B sind jeweils aus einer 7-adrigen Litze (je Funktionsleiter 12A, 12B sieben Einzeldrähte) aus 0,08 mm² Kupferdraht gebildet, welche abweichend von der vereinfachten Darstellung der Figur 2 6-mal mäanderförmig über den gesamten Verlauf der Haupterstreckungsachse X verlegt ist, sodass eine sich aus den einzelnen Längen der Funktionsleiter 12A, 12B ergebende Gesamtlänge (aller Funktionsleiter 12A, 12B) ca. 8 m beträgt.

Mit einer solchen Ausgestaltung der Funktionsleiter 12A, 12B ergibt sich ein ohmscher Widerstand von ca. 4 Ohm je Zone 11A, 11B bzw. je Funktionsleiter 12A, 12B.

Solange der jeweilige Funktionsleiter 12A, 12B mit der jeweiligen Heiz-Steuerschaltung 21 kontaktiert ist, kann die Funktionsschicht 11 bzw. die gesamte Lenkhandhabe 1 gleichmäßig und mit einer vorbestimmten Leistung beheizt werden, wobei für die Heiz-Steuerschaltung 21 nicht die Sensorfunktionalität berücksichtigen muss. Durch eine entsprechende Umschaltung des jeweiligen Schaltelements 23 und durch eine damit einhergehende Trennung des jeweiligen Funktionsleiters 12A, 12B von der jeweiligen Heiz-Steuerschaltung 21 sowie der elektrischen Verbindung mit der jeweiligen Sensor-Steuerschaltung 22 bildet der jeweilige Funktionsleiter 12A, 12B gemeinsam mit der jeweiligen Sensor-Steuerschaltung 22 einen Sensor, welcher eine Berührung in der jeweiligen Zone 11A, 11B detektieren kann, ohne dabei eine Ansteuerung durch die Heiz-Steuerschaltung 21 berücksichtigen zu müssen.

Entsprechend können Heiz-Steuerschaltung 21 und Sensor-Steuerschaltung 22 unabhängig voneinander und vergleichsweise einfach aufgebaut sein.

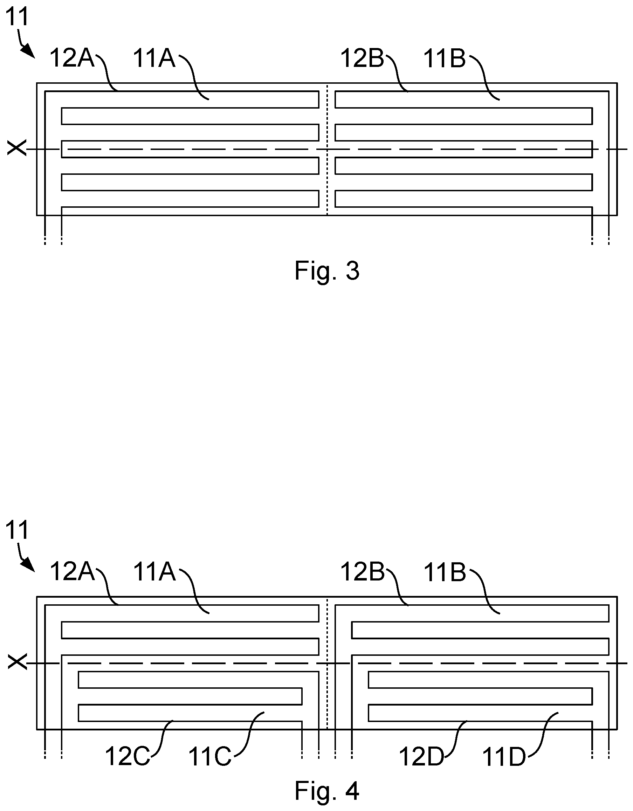

Bei der Funktionsschicht 11 gemäß der Figur 3 sind ebenfalls zwei Zonen 11A, 11B vorgesehen, welche jedoch nicht in Umfangsrichtung U zueinander benachbart angeordnet sind, sondern entlang der Haupterstreckungskurve X aufeinander folgend und somit zueinander benachbart angeordnet sind, wodurch abweichend von der Variante gemäß Figur 2 nicht zwischen einer Berührung an einer Vorderseite und einer Berührung an einer Rückseite der Lenkhandhabe 1 sondern, zwischen Berührungen entlang der Haupterstreckungskurve X unterschieden werden kann. Bezogen auf ein mit der Lenkhandhabe rotierendes System kann somit zwischen einer Berührung der linken Seite der Lenkhandhabe 1 und einer Berührung der rechten Seite der Lenkhandhabe 1 unterschieden werden.

Die Funktionsschicht 11 gemäß Figur 4 weist zudem eine raster- bzw. matrixartige Anordnung von insgesamt vier Zonen 11A, 11B, 11C, 11D mit jeweils einem Funktionsleiter 12A, 12B, 12C, 12D auf, sodass jeweils zwei Zonen (11A zu 11C sowie 11B zu 11D) in Umfangsrichtung U und jeweils zwei Zonen (11A zu 11B sowie 11C zu 11D) entlang der Haupterstreckungskurve X zueinander benachbart sind. Dadurch kann entsprechend zwischen Berührungen an der Vorder- und Rückseite der Lenkhandhabe 1 und zwischen Berührungen entlang der Haupterstreckungskurve X der Lenkhandhabe 1 unterschieden werden.

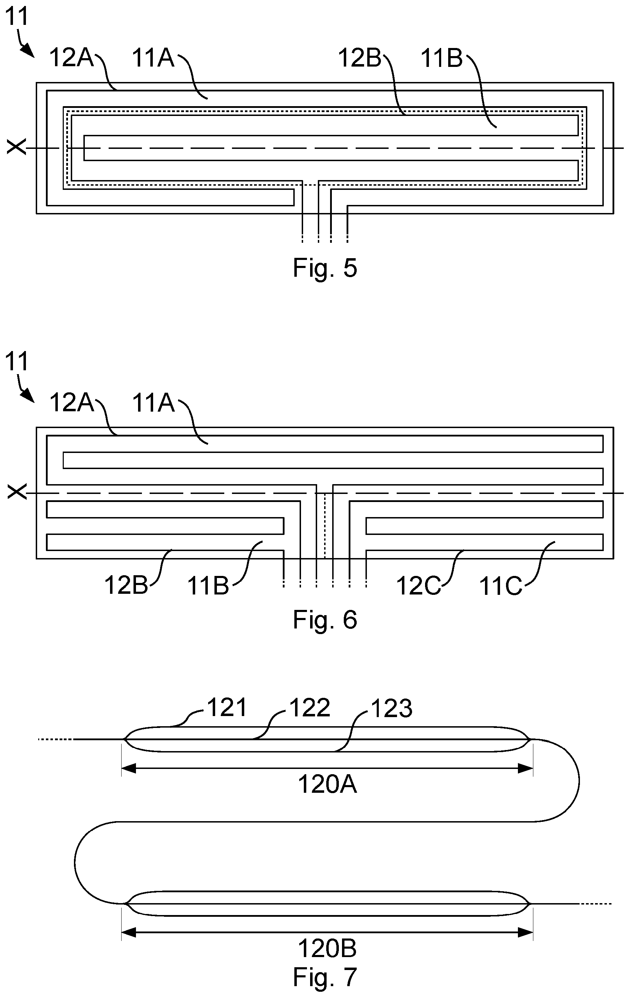

In Figur 5 ist eine weitere Konfiguration der Funktionsschicht 11 mit zwei Zonen 11A, 11B gezeigt, wobei die erste Zone 11A die zweite Zone 11B rahmenförmig umläuft bzw. der erste Funktionsleiter 12A der ersten Zone 11A den zweiten Funktionsleiter 12B der zweiten Zone 11B rahmenförmig umläuft.

Mit Figur 6 ist eine weitere vorteilhafte Variante der Funktionsschicht 11 illustriert, bei welcher drei Zonen 11A, 11B, 11C mit jeweils einem Funktionsleiter 12A, 12B, 12C vorgesehen sind. Dabei ist die erste Zone 11A vorgesehen, eine Rückseite der Lenkhandhabe 1 zu bestimmen. Die zweite und dritte Zone 11B, 11C sind dazu vorgesehen, gemeinsam die Vorderseite der Lenkhandhabe 1 zu bestimmen. Entsprechend ist die erste Zone 11A über die gesamte Erstreckung der Funktionsschicht 11 entlang der Haupterstreckungskurve X, jedoch in Querrichtung zu der Haupterstreckungskurve X nur einseitig zu dieser vorgesehen. Die verbleibende Fläche wird von der zweiten und dritten Zone 11B, 11C belegt, welche entlang der Haupterstreckungskurve X aufeinanderfolgend angeordnet sind. Dadurch kann eine Berührung an der Rückseite der Lenkhandhabe 1 mittels der ersten Zone 11A erkannt und an der Vorderseite zwischen Berührungen auf einer linken und rechten Seite der Lenkhandhabe 1 unterschieden werden, wobei beispielsweise die zweite Zone 11B einer Berührung auf der linken Seite und die dritte Zone 11C einer Berührung auf der rechten Seite der Lenkhandhabe 1 zugeordnet sind. In Figur 7 ist ein Funktionsleiter abschnittsweise dargestellt, welcher einem der Funktionsleiter 12A, 12B, 12C, 12D entsprechen kann, wie er in einer der in den Figuren 2 bis 6 dargestellten Varianten verwendet sein kann. Der in Figur 7 dargestellte Funktionsleiter ist aus mehreren Einzeldrähten und vorliegend beispielhaft drei Einzeldrähten 121, 122, 123 gebildet, welche in dem dargestellten Ausschnitt in den zwei Abschnitten 120A, 120B aufgefächert bzw. separiert sind, sodass durch einen Funktionsleiter eine breitere Fläche der Funktionsschicht und somit der Ober- bzw. Mantelfläche des Kernelements 10 abdeckbar ist. Zwischen den aufgefächerten Abschnitten 120A, 120B kann der Funktionsleiter wie dargestellt auch gebündelt verlaufen.

**Patentansprüche**

1. Lenkhandhabe (1) mit Beheizung und Berührungserkennung für ein Fahrzeug,

   wobei die Lenkhandhabe (1) ein Kernelement (10), eine Steuervorrichtung (20) und zumindest eine auf dem Kernelement (10) angeordnete Funktionsschicht (11) aufweist, wobei die Funktionsschicht (11) zumindest einen in der Funktionsschicht (11) verlaufenden elektrisch leitfähigen Funktionsleiter (12A, 12B, 12C, 12D) als Heizdraht zur Beheizung der Lenkhandhabe (1) aufweist, welcher ein Sensorelement eines Sensors zur Berührungserkennung der Lenkhandhabe (1) ist,
   wobei die Steuervorrichtung (20) elektrisch mit zumindest einem Funktionsleiter (12A, 12B, 12C, 12D) verbunden ist, eine Heiz-Steuerschaltung (21) zur Beheizung der Lenkhandhabe (1) über den Funktionsleiter (12A, 12B, 12C, 12D) sowie eine Sensor-Steuerschaltung (22) zur Berührungserkennung der Lenkhandhabe (1) über den Funktionsleiter (12A, 12B, 12C, 12D) aufweist und ausgebildet ist, den Funktionsleiter (12A, 12B, 12C, 12D) wechselweise mit der Heiz-Steuerschaltung (21) die Lenkhandhabe (1) beheizend und mit der Sensor-Steuerschaltung (22) eine Berührung der Lenkhandhabe (1) erkennend anzusteuern,
   **dadurch gekennzeichnet, dass**
   der Funktionsleiter (12A, 12B, 12C, 12D) aus einer Vielzahl von Einzeldrähten (121, 122, 123) gebildet ist und die Einzeldrähte (121, 122, 123) zumindest abschnittsweise voneinander separiert verlaufend angeordnet sind.

2. Lenkhandhabe nach Anspruch 1,
   wobei die Funktionsschicht (11) das Kernelement (10) in Umfangsrichtung (U) vollständig umgibt.

3. Lenkhandhabe nach Anspruch 1 oder 2,

   wobei die Funktionsschicht (11) eine Mantelfläche des Kernelements (10) im Wesentlichen vollständig abdeckend auf dem Kernelement (10) anordenbar ist
   und/oder eine Form der Funktionsschicht (11) insbesondere eine Abwicklung der Mantelfläche des Kernelements (10) ist.

4. Lenkhandhabe nach einem der vorhergehenden Ansprüche,
   wobei der zumindest eine Funktionsleiter (12A, 12B, 12C, 12D) gleichmäßig in der Funktionsschicht (11) angeordnet ist und insbesondere einem vorbestimmten Verlauf folgend und weiter insbesondere mäanderförmig in der Funktionsschicht (11) angeordnet ist.

5. Lenkhandhabe nach einem der vorhergehenden Ansprüche,
   wobei die Funktionsschicht (11) in zumindest zwei Zonen (11A, 11B, 11C, 11D) unterteilt ist und je Zone (11A, 11B, 11C, 11D) jeweils ein die jeweilige Zone (11A, 11B, 11C, 11D) abdeckender Funktionsleiter (12A, 12B, 12C, 12D) vorgesehen ist.

6. Lenkhandhabe nach einem der vorhergehenden Ansprüche,

wobei die Funktionsschicht (11) eine flexible Trägerschicht aufweist, auf welcher der zumindest eine Funktionsleiter (12A, 12B, 12C, 12D) angeordnet ist und/oder in welche der Funktionsleiter (12A, 12B, 12C, 12D) eingebettet ist.

7. Lenkhandhabe nach einem der vorhergehenden Ansprüche,
wobei die Steuervorrichtung (20) ein Schaltelement (23) aufweist, welches ausgebildet ist, den Funktionsleiter (12A, 12B, 12C, 12D) wechselweise elektrisch mit der Heiz-Steuerschaltung (21) und der Sensor-Steuerschaltung (22) zu verbinden.

8. Lenkhandhabe nach einem der vorhergehenden Ansprüche,
wobei der Funktionsleiter (12A, 12B, 12C, 12D) ein Einzeldraht ist oder aus einer Vielzahl von Einzeldrähten (121, 122, 123) gebildet ist.

9. Lenkhandhabe nach einem der vorhergehenden Ansprüche,
wobei ein ohmscher Widerstand des zumindest einen Funktionsleiters (12A, 12B, 12C, 12D) abhängig von einer Länge des Funktionsleiters und/oder einem Verlauf des jeweiligen Funktionsleiters (12A, 12B, 12C, 12D) in der Funktionsschicht (11) gewählt ist, sodass eine vorbestimmte Heizleistung und eine vorbestimmte Sensorempfindlichkeit erreichbar ist.

10. Lenkhandhabe nach einem der vorhergehenden Ansprüche,
wobei ein Abstand (15) zwischen zwei zueinander benachbarten und parallel verlaufenden Abschnitten des zumindest einen Funktionsleiters (12A, 12B, 12C, 12D) kleiner oder gleich einem vorbestimmten minimalen Berührabstand ist, welcher insbesondere 10 mm ist.

**Claims**

1. A steering handle (1) with heating and contact detection for a vehicle,

wherein the steering handle (1) has a core element (10), a control device (20), and at least one functional layer (11) arranged on the core element (10),
wherein the functional layer (11) has at least one electrically conductive functional conductor (12A, 12B, 12C, 12D) running in the functional layer (11) as a heating wire for heating the steering handle (1), which functional conductor (12A, 12B, 12C, 12D) is a sensor element of a sensor for detecting contact with the steering handle (1),
wherein the control device (20) is electrically connected to at least one functional conductor (12A, 12B, 12C, 12D), has a heating control circuit (21) for heating the steering handle (1) via the functional conductor (12A, 12B, 12C, 12D) as well as a sensor control circuit (22) for detecting contact with the steering handle (1) via the functional conductor (12A, 12B, 12C, 12D), and is designed to control the functional conductor (12A, 12B, 12C, 12D) alternately with the heating control circuit (21) in order to heat the steering handle (1) and with the sensor control circuit (22) in order to detect contact with the steering handle (1),
**characterized in that** the functional conductor (12A, 12B, 12C, 12D) is formed from a plurality of individual wires (121, 122, 123), and the individual wires (121, 122, 123) are arranged so as to run at least partially separately from one another.

2. The steering handle according to claim 1,
wherein the functional layer (11) completely surrounds the core element (10) in the circumferential direction (U).

3. The steering handle according to claim 1 or 2,

wherein the functional layer (11) can be arranged on the core element (10) so as to substantially completely cover a lateral surface of the core element (10)
and/or a shape of the functional layer (11) is in particular a progression of the lateral surface of the core element (10).

4. The steering handle according to any one of the preceding claims,
wherein the at least one functional conductor (12A, 12B, 12C, 12D) is arranged uniformly in the functional layer (11) and is arranged in particular following a predetermined course and furthermore in particular in a meandering shape in the functional layer (11).

5. The steering handle according to any one of the preceding claims, wherein the functional layer (11) is divided into at least two zones (11A, 11B, 11C, 11D), and a functional conductor (12A, 12B, 12C, 12D) covering the respective zone (11A, 11B, 11C, 11D) is provided for each zone (11A, 11B, 11C, 11D).

6. The steering handle according to any one of the preceding claims, wherein the functional layer (11) has a flexible carrier layer on which the at least one functional conductor (12A, 12B, 12C, 12D) is arranged and/or in which the functional conductor (12A, 12B, 12C, 12D) is embedded.

7. The steering handle according to any one of the preceding claims,
wherein the control device (20) has a switching element (23) which is designed to alternately electrically connect the functional conductor (12A, 12B, 12C, 12D) to the heating control circuit (21) and to the sensor control circuit (22).

8. The steering handle according to any one of the preceding claims,
wherein the functional conductor (12A, 12B, 12C, 12D) is a single wire or is formed from a plurality of single wires (121, 122, 123).

9. The steering handle according to any one of the preceding claims,
wherein an ohmic resistance of the at least one functional conductor (12A, 12B, 12C, 12D) is selected as a function of a length of the functional conductor and/or a course of the respective functional conductor (12A, 12B, 12C, 12D) in the functional layer (11), thus enabling a predetermined heating output and a predetermined sensor sensitivity to be achieved.

10. The steering handle according to any one of the preceding claims,
wherein a distance (15) between two mutually adjacent and parallel sections of the at least one functional conductor (12A, 12B, 12C, 12D) is less than or equal to a predetermined minimum contact distance, which is in particular 10 mm.

**Revendications**

1. Manette de direction (1) avec chauffage et détection de contact pour un véhicule,

dans laquelle la manette de direction (1) présente un élément central (10), un dispositif de commande (20) et au moins une couche de fonction (11) disposée sur l'élément central (10),
dans laquelle la couche de fonction (11) présente au moins un conducteur de fonction (12A, 12B, 12C, 12D) électriquement conducteur, s'étendant dans la couche de fonction (11), sous la forme d'un fil chauffant pour chauffer la manette de direction (1) et qui est un élément capteur d'un capteur pour la détection de contact de la manette de direction (1),
dans laquelle le dispositif de commande (20) est relié électriquement à au moins un conducteur de fonction (12A, 12B, 12C, 12D), présente un circuit de commande de chauffage (21) pour chauffer la manette de direction (1) par l'intermédiaire du conducteur de fonction (12A, 12B, 12C, 12D), ainsi qu'un circuit de commande de capteur (22) pour la détection de contact de la manette de direction (1) par l'intermédiaire du conducteur de fonction (12A, 12B, 12C, 12D), et est réalisé pour piloter le conducteur de fonction (12A, 12B, 12C, 12D) en alternance avec le circuit de commande de chauffage (21) en chauffant la manette de direction (1) et en détectant un contact avec la manette de direction (1) à l'aide du circuit de commande de capteur (22),
**caractérisée en ce que** le conducteur de fonction (12A, 12B, 12C, 12D) est formé à partir d'une pluralité de fils individuels (121, 122, 123), et les fils individuels (121, 122, 123) sont disposés au moins par endroits en s'étendant séparément les uns des autres.

2. Manette de direction selon la revendication 1,
dans laquelle la couche de fonction (11) entoure complètement l'élément central (10) dans la direction circonférentielle (U).

3. Manette de direction selon la revendication 1 ou 2,

dans laquelle la couche de fonction (11) peut être disposée sur l'élément central (10) en recouvrant de manière substantiellement complète une surface latérale de l'élément central (10),
et/ou une forme de la couche de fonction (11) est en particulier un développement de la surface latérale de l'élément central (10).

4. Manette de direction selon l'une quelconque des revendications précédentes, dans laquelle ledit au moins un conducteur de fonction (12A, 12B, 12C, 12D) est disposé de manière homogène dans la couche de fonction (11) et est disposé dans la couche de fonction (11) en particulier en suivant un tracé prédéterminé et de plus en particulier en forme de méandre.

5. Manette de direction selon l'une quelconque des revendications précédentes, dans laquelle la couche de fonction (11) est divisée en au moins deux zones (11A, 11B, 11C, 11D), et pour chaque zone (11A, 11B, 11C, 11D) respectivement un conducteur de fonction (12A, 12B, 12C, 12D) recouvrant la zone respective (11A, 11B, 11C, 11D) est prévu.

6. Manette de direction selon l'une quelconque des revendications précédentes,
dans laquelle la couche de fonction (11) présente une couche de support souple sur laquelle ledit au moins un conducteur de fonction (12A, 12B, 12C, 12D) est disposé et/ou dans laquelle le conducteur de fonction (12A, 12B, 12C, 12D) est intégré.

**7.** Manette de direction selon l'une quelconque des revendications précédentes, dans laquelle le dispositif de commande (20) présente un élément de commutation (23) qui est réalisé pour relier le conducteur de fonction (12A, 12B, 12C, 12D) en alternance électriquement au circuit de commande de chauffage (21) et au circuit de commande de capteur (22).

**8.** Manette de direction selon l'une quelconque des revendications précédentes, dans laquelle le conducteur de fonction (12A, 12B, 12C, 12D) est un fil individuel ou est formé à partir d'une pluralité de fils individuels (121, 122, 123).

**9.** Manette de direction selon l'une quelconque des revendications précédentes, dans laquelle une résistance ohmique dudit au moins un conducteur de fonction (12A, 12B, 12C, 12D) est sélectionnée en fonction d'une longueur du conducteur de fonction et/ou d'un tracé du conducteur de fonction (12A, 12B, 12C, 12D) respectif dans la couche de fonction (11) de sorte qu'une puissance de chauffage prédéterminée et une sensibilité de capteur prédéterminée puissent être atteintes.

**10.** Manette de direction selon l'une quelconque des revendications précédentes, dans laquelle une distance (15) entre deux parties, voisines l'une de l'autre et s'étendant en parallèle, dudit au moins un conducteur de fonction (12A, 12B, 12C, 12D) est inférieure ou égale à une distance de contact minimale prédéterminée qui mesure en particulier 10 mm.

Fig. 1

Fig. 2

11

12A  11A  12B  11B

X

Fig. 3

11

12A  11A  12B  11B

X

12C  11C  12D  11D

Fig. 4

11

12A  11A          12B      11B

X

Fig. 5

11

12A  11A

X

12B   11B          12C   11C

Fig. 6

121   122   123

120A

120B

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2028078 A1
- DE 112018005213 T5
- DE 102019124293 A1
- WO 2018213344 A1